# EUROPEAN PATENT SPECIFICATION

(11) **EP 3 103 016 B1**
(45) Date of publication and mention of the grant of the patent: **05.10.2022**
(21) Application number: 14704555.3
(22) Date of filing: 07.02.2014
(51) Int. Cl.: G06F 9/4401, G06F 9/455, H04L 61/5014, H04L 61/5038, H04L 101/622

(54) **VIRTUALIZED APPLICATION CLUSTER**
VIRTUELLER ANWENDUNGSCLUSTER
CLUSTER D'APPLICATIONS VIRTUALISÉES

(43) Date of publication of application: 14.12.2016
(73) Proprietor: Telefonaktiebolaget LM Ericsson (publ), 164 83 Stockholm (SE)
(72) Inventor: WOERNDLE, Peter, 88239 Wangen im Allgaeu (DE); CATREIN, Daniel, 52146 Wuerselen (DE); MARTÍNEZ PERALLÓN, Rosa María, 52062 Aachen (DE); QUINET, Raphael, B-4000 Liège (BE)
(74) Representative: Zacco Sweden AB
(86) International application number: PCT/EP2014/052491
(87) International publication number: WO 2015/117676

(56) References cited:
- WO-A1-2012/069064
- GB-A- 2 497 196
- US-A1- 2008 089 338
- US-A1- 2013 151 835
- US-A1- 2013 346 576

## Description

### Technical Field

The present disclosure generally relates to virtualized application clusters. In particular, a technique for managing deployment of a virtualized application cluster is described. The technique can be implemented as a method, a software solution, a hardware solution, or a combination thereof.

### Background

In computing, booting is the initial set of operations a computer system performs after its start. When a computer system boots via a network connection, the Dynamic Host Configuration Protocol (DHCP) is often used to gather an Internet Protocol (IP) address by the booting computer system. To this end, the computer system sends an initial DHCP request and queries another computer system, the DHCP server, for an IP address. When the DHCP server has a valid entry for the requesting computer system in its configuration database, it will send out a DHCP response with the IP address assigned to the requesting computer system.

The IP address provided by the DHCP server can be assigned randomly or based on a system identifier contained in the DHCP request. Often, a Media Access Control (MAC) address of the requesting computer system is used by the DHCP server to assign a specific IP address to it. To this end, a mapping between MAC addresses and IP addresses can be configured by an operator after the installation of the computer systems. The mapping can also be performed automatically. When, for example, the computer systems are part of a physical blade system with multiple blade servers, the MAC addresses of the blade servers can automatically be discovered or assigned according to their physical positions in a chassis or shelf.

In a virtualized environment, such as a virtualized application cluster with multiple virtual machines, the virtual "hardware" of the virtual machines cannot be based on physical parameters identifying the physical hardware (such as a position in a chassis). However, identifying parameters can be generated automatically at deployment time of the virtual machines. Each new virtual machine can be assigned a random MAC address when it is created. This also means that the MAC address cannot be entered in a configuration database of the DHCP server before the actual deployment of the virtual machine takes place.

In a virtualized environment, a DHCP server can therefore not easily recognize the MAC address or other DHCP options of its clients (i.e., the virtual machines). This fact makes it difficult to automate the deployment of new virtual machines in a virtual environment, even though virtual environments are suitable and actually intended to exploit automated procedures. This problem applies to both legacy application clusters that are ported to a cloud or virtualized environment, and to new application clusters that are designed to work in both virtualized and physical deployments.

A possible workaround for the initial deployment of a virtualized application cluster requires human intervention. After all virtual machines have been created, an administrator may edit the configuration database of a virtual DHCP server within the cluster and give it a list of MAC addresses that have been assigned to the virtual machines. However, this solution is not suitable for fully automated deployments. Also, it requires all virtual machines to be persistent, and it makes it difficult to increase the capacity of the cluster at a later point in time by adding new virtual machines to it because the required human intervention limits the opportunities for automatic scaling.

Document US 2008/089338 A1 may be construed to disclose a method for managing from a remote terminal a virtual machine, which represents one of a plurality of virtual machines implemented on a hardware platform that is communicably coupled to the remote terminal via a computer network, is provided. Each virtual machine is associated with a MAC address of a plurality of MAC addresses associated with the hardware platform. The method includes receiving, using a network interface card (NIC) associated with the hardware platform, from the remote terminal a manage- ment packet, which represents a data packet having at least a first MAC address and an action (e.g., wake up or shut-down) for the virtual machine. The management packet is forwarded to a NIC manager, which ascertains whether the first MAC ad- dress matches one of the plurality of MAC addresses associated with the hardware platform. If a match is identified, the action for the virtual machine is performed.

### Summary

There is a need for a technique that permits an efficient deployment of virtual machines within a virtualized application cluster.

According to a first aspect, a method of operating a managing component of a virtualized application cluster is provided, wherein the cluster is to comprise a system controller and at least one virtual machine with a dedicated function. The method comprises deploying the system controller and providing the system controller with access to an association between virtual machine identifiers and virtual machine functions. The method further comprises determining a virtual machine identifier that is associated with the dedicated function of a virtual machine to be deployed,wherein the dedicated function define booting information dedicated to the virtual machine, wherein the booting information defines at least one of an address of a boot server configured to provide one or more boot files to the virtual machine and a file path to the one or more boot files and wherein the virtual machine identifier is determined from an Open Virtualization Format (OVF) file (60), wherein the OVF file (60) contains a descriptor for each virtual machine. Still further, the method comprises deploying the virtual machine and statically configuring the virtual machine, at deployment, with the determined virtual machine identifier.

The function of a virtual machine may be defined as a role of the virtual machine within the cluster. As such, a specific function may be defined by a specific software package for the virtual machine.

In one variant each virtual machine identifier is associated with exactly one function. Additionally, multiple virtual machine identifiers may be associated with the same function. The association may be defined by a mapping (i.e., in a table) or otherwise.

Deployment of the system controller and/or of the virtual machine comprises the creation of one or more virtual hardware elements, such as a virtual network card or a virtual Electronically Erasable Programmable Read-Only Memory (EEPROM). In one variant, the managing component configures at least one of a firmware of the virtual network card, a Basic Input Output System (BIOS) and the virtual EEPROM of the virtual machine with the determined virtual machine identifier. As such, the managing component may a establish a uniqueness of the virtual machine in terms of its network card firmware, BIOS and/or virtual EEPROM.

The dedicated function of an individual virtual machine defines booting information dedicated to the virtual machine. The booting information, in turn, define at least one of a address of a boot server configured to provide one or more boot files to the virtual machine and a file path to the one or more boot files as explained above.

The system controller may itself be deployed as a virtual machine within the cluster. In some implementations, the system controller may provide services (e.g., DHCP services) for one or more of the other virtual machines within the cluster.

The virtual machine identifier is a Layer 2 address of the virtual machine or different from the Layer 2 address of the virtual machine. In the latter case, the virtual machine identifier is a Layer 3 or higher layer address or any operator-defined item of information.

The method further comprise reading a descriptor of the virtualized application cluster and deploying at least one of the system controller and the virtual machine in accordance with the descriptor. The descriptor defines one or more parameters of the virtualized application cluster and is provided in the form of a file or via an operator setting. In one variant, the virtual machine identifier is determined from the descriptor. As such, the descriptor may define one or more virtual machines in terms of their associated identifiers. Also the function of an individual virtual machine may be defined in the descriptor. As such, the descriptor may define the association between the virtual machine identifiers and the virtual machine functions that will also be made available to the system controller.

Also provided is a computer program product comprising program code portions for performing the steps of any methods and method aspects disclosed herein when the computer program product is executed on at least one computing device. It will be appreciated that the computer program product may also be executed in a distributed manner on multiple computer devices. The computer program product may be stored on a computer-readable recording medium, such as a semiconductor memory, DVD or CD-ROM. The computer program product may also be provided for download via a communications network.

Also provided is a managing component of a virtualized application cluster, wherein the cluster is to comprise a system controller and at least one virtual machine with a dedicated function. The managing component is configured to deploy the system controller and to provide the system controller with access to an association between virtual machine identifiers and virtual machine functions, to determine a virtual machine identifier that is associated with the dedicated function of the virtual machine to be deployed, wherein the dedicated function defines booting information dedicated to the virtual machine, wherein the booting information defines at least one of an address of a boot server configured to provide one or more boot files to the virtual machine and a file path to the one or more boot files, and wherein the virtual machine identifier is determined from an Open Virtualization Format (OVF) file (60), wherein the OVF file (60) contains a descriptor for each virtual machine. The managing component is further configured to deploy the virtual machine and to statically configure the virtual machine, at deployment, with the determined virtual machine identifier.

It will appreciated that the above methods and entities (i.e., system controller, managing component, virtual machine and switch) may be combined as needed. Moreover, it will be appreciated that any statements made with respect to one aspect also relates to all the other aspects unless specifically excluded.

### Brief Description of the Drawings

Further aspects, details and advantages of the present disclosure will become apparent from the following description of exemplary embodiments in conjunction with the accompanying drawings, wherein:
Fig. 1 schematically shows components of a virtualized computing system according to an embodiment of the present disclosure;
Fig. 2 schematically shows block diagrams of embodiments of several of the components of the virtualized computing system of Fig. 1;
Fig. 3 is a schematic diagram illustrating a more detailed embodiment of a virtualized computing system;
Fig. 4 is a flow diagram illustrating method embodiments for operating the components of Fig. 3;
Fig. 5 is an embodiment of an association between virtual machine identifiers, virtual machine functions and dedicated booting informations;
Fig. 6 is an illustration of a descriptor embodiment;
Fig. 7 schematically illustrates an association operation based on the table of Fig. 5;
Fig. 8 is a schematic diagram illustrating another more detailed non-claimed embodiment of a virtualized computing system;
Fig. 9 is a flow diagram illustrating method non-claimed embodiments for operating the components of Fig. 8;
Fig. 10 is a schematic diagram illustrating a still further more detailed non-claimed embodiment of a virtualized computing system; and
Fig. 11 is a flow diagram illustrating method non-claimed embodiments for operating the components of Fig. 10.

### Detailed Description

In the following description of exemplary embodiments, for purposes of explanation and not limitation, specific details are set forth, such as particular methods, functions and procedures, in order to provide a thorough understanding of the technique presented herein. It will apparent to one skilled in the art that this technique may be practiced in other embodiments that depart from these specific details. For example, while the following embodiments will primarily be described with respect to exemplary protocols (e.g., DHCP, TFTP, etc.) and particular identifier types (e.g., MAC addresses, etc.), it will be evident that the present disclosure can also be practiced using different protocols and different identifiers.

Moreover, those skilled in the art will appreciate that the methods, functions and procedures explained herein may be implemented using software functioning in conjunction with one or more programmed processors, an Application Specific Integrated Circuit (ASIC), a Digital Signal Processor (DSP) or general purpose computers. It will also be appreciated that while the following embodiments will primarily be described in the context of methods and virtual or physical devices, the present disclosure may also be embodied in a computer program product which can be loaded to run on a computer or a distributed computer system comprising one or more processors and one or more memories functioning as storage, wherein the one or more memories are configured to store one or more programs that realize the technique presented herein when the one or more programs are executed on one or more computers.

The following embodiments describe aspects in connection with the deployment of one or more virtual machines in a virtualized application cluster. The virtual machines typically assume dedicated functions, or roles, within the cluster. Those functions rely on dedicated software and/or hardware configurations that are defined in initial booting procedures. The booting procedures may involve request/response messaging with a system controller, for example in an initial discovery phase to request IP or other network addresses by the virtual machines. In such requests, the virtual machines may signal their identifiers, such as their MAC addresses.

When booting a new virtual machine that is part of a clustered application, the system controller of that cluster may get requests from multiple virtual machines but it often does not know anything about the virtual machines issuing these requests (e.g., it sees unknown MAC addresses). As a result, the system controller cannot infer what kind of software should be installed on the virtual machines, and it cannot even be sure that a particular virtual machine should be part of the cluster at all, or if the request was received from a virtual machine that was not supposed to boot on a specific subnet (e.g., the one associated with the system controller).

This situation can cause problems because although all virtual machines may start booting in the same way, they may need to have different characteristics which require that each virtual machine gets exactly the function, or role, (and the corresponding software) that was allocated to it. Exemplary characteristics that can differ from one virtual machine to another include one or more of the amount of memory, the number of virtual Central Processing Unit (CPU) cores, the number of virtual network cards and the way they are connected to the virtual switches, and so on. If the system controller cannot assign the right function (and software) to the right virtual machine, then the cluster may fail to boot or fail to run correctly.

Some of the following embodiments are thus directed to deploying a virtualized application cluster in a cloud and making the virtual machines in the clusters distinguishable on the basis of information available to the system controller. The system controller has to know how to assign the appropriate booting information (e.g., in terms of an Operating System, OS, kernel and other software) to each virtual machine. As said, in a virtual environment, the MAC addresses of the virtual machines may not be known in advance by the system controller, so the system controller has to be enabled to recognize the virtual machines belonging to the cluster. Various approaches for gaining such knowledge will now be described in more detail. This knowledge can also be useful after an initial deployment of the cluster, when new virtual machines are added via automatic or manual scaling, or in general for all lifecycle management operations on virtual machines belonging to that cluster.

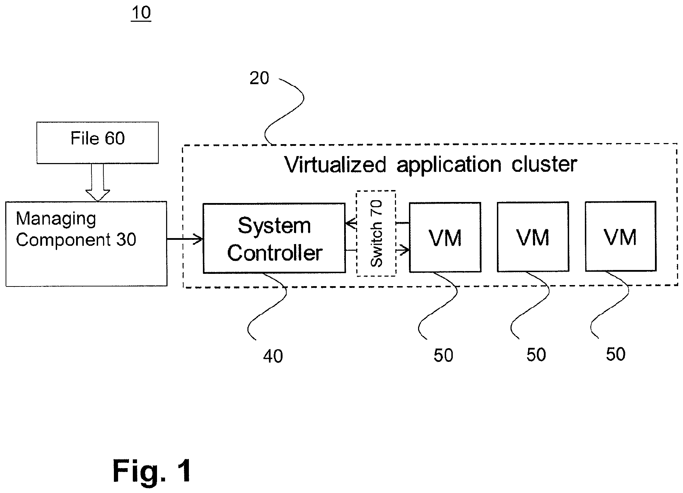

Fig. 1 illustrates an embodiment of a virtualized computing system 10. As shown in Fig. 1, the virtualized computing system 10 comprises a virtualized application cluster 20 and a managing component 30 outside the cluster 20. The cluster 20, in turn, comprises a system controller 40 and one or more virtual machines 50. The operations of the managing component 30 are at least partially controlled by control information received in the form of a file 60 or otherwise (e.g., by an operator setting). The clustered application of Fig. 1 may realize one or more functions of a telecommunications node. Exemplary telecommunications nodes in this regard include MSC-S BC, CSCF, MTAS, and so on.

As illustrated in Fig. 1, an optional switch 70 may be located between the system controller 40 and the virtual machines 50 to intercept some or all of the communication there between. The operation of the switch 70 may be controlled based on information received from the managing component 30. Although the switch 70 is illustrated in Fig. 1 to be part of the virtualized application cluster 20, the switch 70 need not necessarily be a virtual component. Rather, the switch 70 could also be realized in the form of a physical component. In the scope of the present disclosure, the term switch also encompasses component having a similar function, such as router, when it comes to translation tasks.

The managing component 30 of the virtualized computing system 10 take various forms. The managing component 30 may be a cluster manager. Since virtualized environments are sometimes also referred to as "clouds", the cluster manager is sometimes also referred to as cloud manager, or cloud orchestrator.

The managing component 30 is in one variant configured to deploy the cluster 20, and in particular the system controller 40 and the one or more virtual machines 50. It will be appreciated that the managing component 30 may be configured to deploy, and manage, multiple such clusters 20. Cluster deployment by the managing component 30 may be performed on the basis of control information received in the form of the file 60 or otherwise (e.g, via an operator setting). The managing component 30 can be operated for the initial deployment of the cluster 20 with the virtual machines 50, or when an additional virtual machine 50 is added a later point in time to the cluster 20 (e.g., to provide elasticity or application scaling).

The managing component 30 can generally be realized in the form of a software entity that provides an abstraction layer above a virtualization layer comprising the virtualized application cluster 20. As such, external applications requesting services provided by the cluster 20 may only see the abstraction layer. The abstraction layer with the managing component 30 may manage accesses to the underlying physical infrastructure and physical resources.

The system controller 40 within the virtualized application cluster 20 may be a software entity. Moreover, the system controller 40 may be a dedicated virtual machine itself. As such, the system controller 40 may be located together with the virtual machines 50 in the virtualization layer.

The virtual machines 50 may be realized in the form of software entities without disc space, which will be loaded only at run time. Since the virtual machines 50 at initial deployment will not have any software or operating system thereon, they rely on the system controller 40 for loading the required software and other configuration at boot time depending on their function within the cluster 20.

The virtual machines 50 that form the virtualized application cluster 20 will, upon booting from the system controller 40 or otherwise, be given various functions with the appropriate software and configuration. Once the cluster 20 is ready (e.g., all virtual machines 50 have fully been booted), it will typically be visible to other systems as a single large system instead of a collection of individual virtual machines.

The virtual machines 50 are in one variant deployed using control information conforming to the Open Virtualization Format (OVF). OVF is an open standard defined by the Distributed Management Task Force (DMTF) and used for packaging and distributing virtual applications by way of OVF files (see reference numeral 60 in Fig. 1).

An OVF file is a descriptor in XML (Extensible Markup Language) format which describes the virtual hardware requirements and characteristics of the different virtual machines 50 forming the virtualized application cluster 20. As will be appreciated, there exist several other proposed standards and proprietary formats for descriptors.

The descriptor is used as input for the managing component 30, such as a cloud manager. The descriptor is read by the cloud manager and controls the cloud manager when deploying the set of virtual machines 50 fulfilling the requested functions or services.

For the booting procedure, including the initial installation of software in the virtualized environment shown in Fig. 1, DHCP can be used, optionally, in combination with TFTP or a similar protocol. TFTP is a simple protocol that allows a virtual machine 50 to obtain the files that it needs for booting. For the installation process, an at least locally unique identifier needs to be associated with each virtual machine 50. The unique identifier makes it possible for a DHCP server to recognize an individual virtual machine 50 (i.e., its function) in order to assign an IP address to it and provide the right software and other configuration for that particular virtual machine 50.

Thus, DHCP may not only used to assign IP addresses but also to pass booting information (and other information about available services) to a requesting virtual machine 50 that needs to be booted. This information can include, but is not limited to, the addresses of routers, time servers, TFTP boot servers and file paths. Based on these parameters, the virtual machine 50 fetches all required data and software for the boot process and executes the boot process.

In the exemplary implementation of Fig. 1, the DHCP boot services and, optionally, the TFTP boot services, are provided by the system controller 40. It will be appreciated that those services could alternatively be provided by any other component inside or outside the virtualized application cluster 20.

The general boot process for the virtualized application cluster 20 in some or all the embodiments described herein can in one variant be described with the example of a Preboot Execution Environment (PXE) boot process of a single virtual machine (VM) 50. In the following, it will be assumed that there is a running DHCP server in the same Layer 2 domain as the booting virtual machine 50:
1. VM 50 is deployed within the virtualized application cluster 20
2. VM 50 runs PXE boot program in firmware of a virtual network card
3. VM 50 sends out initial DHCP request message (with its identifier) to a broadcast address
4. VM 50 receives from the DHCP server a response message containing IP address,
   TFTP server address, and path to initial kernel (e.g., a linux kernel)
5. VM 50 sends TFTP get to a TFTP server for initial OS kernel (e.g., pxelinux.0)
6. VM 50 sends TFTP get to TFTP server for boot configuration (e.g., pxelinux.cfg/...)
7. VM 50 receives from TFTP server the initial kernel
8. VM 50 receives from TFTP server a configuration file
9. VM 50 executes the initial kernel
10. VM 50 sends TFTP get to TFTP server for modules and an initial ramdisk (initrd)
11. VM 50 receives from TFTP server the initial ramdisk
12. VM 50 loads ramdisk and executes the content
13. VM 50 executes further boot scripts

It can be easily understood that the booting information (in particular the TFTP server address and the path to the initial OS kernel) contained in the DHCP response determines the initial software loaded by the virtual machine 50. Therefore, this DHCP messaging may in one implementation be used to define the function, or role, the virtual machine 50 should execute in the virtualized application cluster 20 after it is booted. Details thereof will be described below.

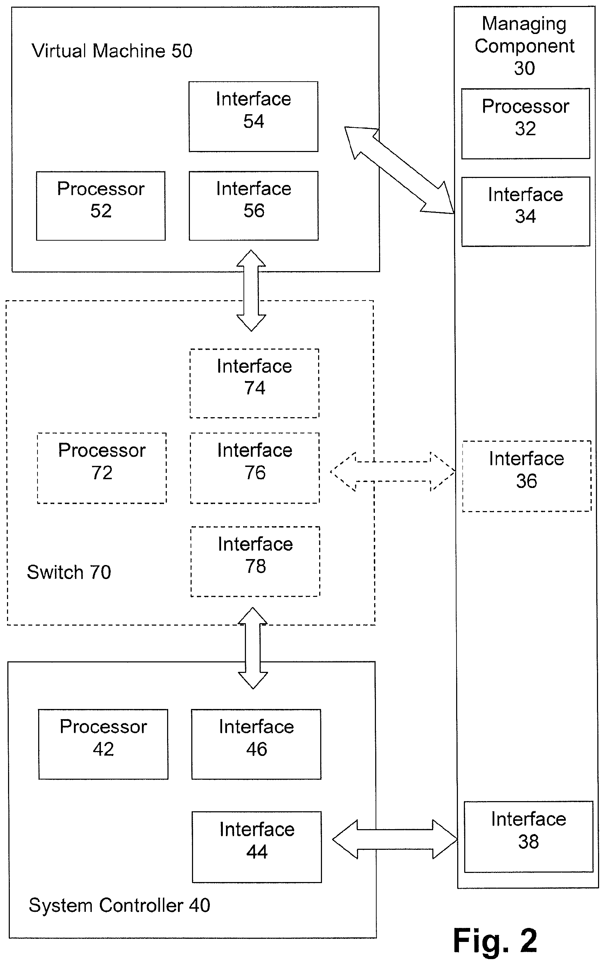

Fig. 2 illustrates block diagrams of the managing component 30, the system controller 40, one virtual machine 50 and the optional switch 70 of Fig. 1.

The managing component 30 comprises a processor 32 as well as a first interface 34 coupled to the virtual machine 50, a second interface 36 coupled to the switch 70, and a third interface 38 coupled to the system controller 40. As will be appreciated, the second interface 36 is optional in case the switch 70 is not present.

The system controller 40 comprises a processor 42, a first interface 44 coupled to the interface 38 of the managing component 30 as well as a second interface 46 coupled to the switch 70. In case the switch 70 is not provided, the interface 46 of the system controller 40 may directly be coupled to the virtual machine 50. In other configurations, the interface 46 may couple the system controller 40 to both the virtual machine 50 and the switch 70.

The virtual machine 50 comprises a processor 52 as well as a first interface 54 coupled to the interface 34 of the managing component 30 and a second interface 56 coupled to the switch 70. Again, when the switch 70 is not present, the interface 56 may directly be coupled to the system controller 40. It will be appreciated that the cloud 20 may comprise multiple virtual machines 50 as shown in Fig. 2.

The optional switch 70 comprises a processor 72 as well as a first interface 74 coupled to the interface 56 of the virtual machine 50, a second interface 76 coupled to the interface 36 of the managing component 30, and a third interface 78 coupled to the interface 46 of the system controller 40.

The processors 32, 42, 52 and 72 are generally configured to perform the processing steps described herein, such as booting steps, determining steps, deploying steps including steps, configuring steps, and so on. The interfaces 34, 36, 38, 44, 46, 54, 56, 74, 76 and 78 are generally configured to perform the sending and receiving steps described herein.

Any interface illustrated in Fig. 2 may be realized as a hardware interface, a software interface or a combination thereof. It will be appreciated that the system controller 40 and the at least one virtual machine 50 may be realized as virtual components and may thus share processing resources, optionally together with the managing component 30. This means that the processors 32, 42 and 52 need not necessarily be realized in the form of separate hardware resources. The switch 70, on the other hand, may be realized either as a virtual component or as a physical component.

The following embodiments partially assume that there is a communication protocol in place between the interfaces illustrated in Fig. 2. This communication protocol can be unidirectional if there is no need for one component to confirm that it has correctly received or processed information. The communication protocol can also be bidirectional and may allow one component to confirm that it has correctly processed the information received in a message or otherwise. A bidirectional communication protocol may also be used to specifically request information by a component or to request that the information be refreshed (e.g., when the component restarts).

The communication protocol may, for example, be based on any message queue protocol or any protocol suitable for sending notifications. In one implementation, the Hypertext Transfer Protocol (HTTP) can be used as communication, or transport, protocol (e.g., for REST-style requests to a predefined port number on one of the components). In another realization, a publish/subscribe mechanism could be used by which one component connects to the other component.

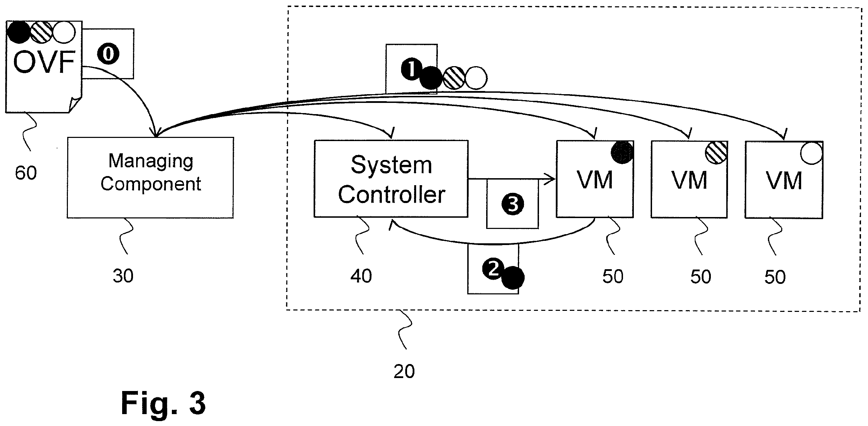

Embodiments of three operational modes of the virtualized computing system 10 illustrated in Figs. 1 and 2 will now be described in more detail with reference to Figs. 3 to 11. It will be appreciated that those operational modes can be combined as needed. It will further be appreciated that the statements made with respect to specific components, functions, steps etc. for one embodiment can likewise apply to any of the other embodiments.

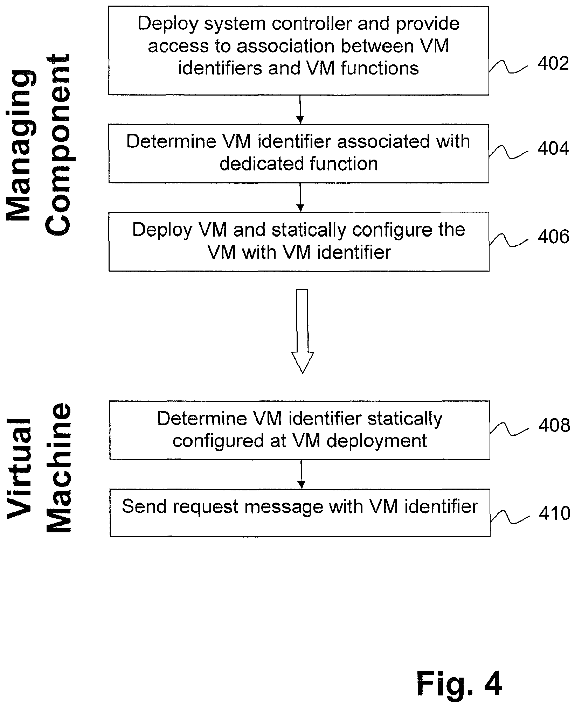

Fig. 3 illustrates a first embodiment of the signaling among the components constituting the virtualized computing system 10 of Figs. 1 and 2. Fig. 4 shows a flow diagram with certain method steps performed by the system controller 40 and one of the virtual machines 50 in connection with the signaling illustrated in Fig. 3. It will be appreciated that the technique discussed hereinafter with respect to Figs. 3 and 4 can be implemented without the switch 40.

The signaling illustrated in Fig. 3 starts with the managing component 30 reading an OVF file 60 or any other descriptor used for packaging and distributing virtual applications. As explained above, the file 60 defines details of the system controller 40 and the virtual machines 50 that are to be deployed to form the virtualized application cluster 20.

Based on the control information included in the file 60 the managing component 30 first deploys the system controller 40 as a virtual machine within the cluster 20 (step 402). As understood herein, the deployment of a virtual machine may include the installation of one or more virtual hardware elements (such as a virtual network card) for each virtual machine to be created.

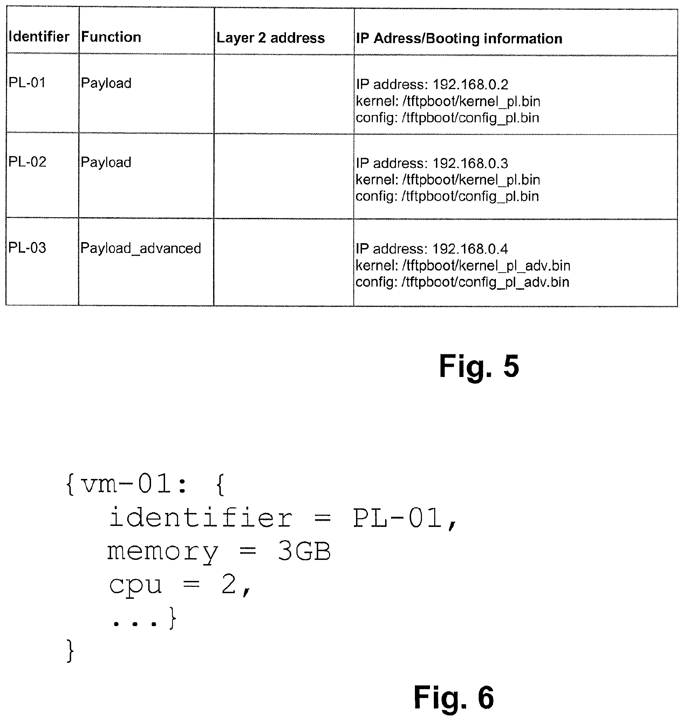

After the system controller 40 has been deployed by the managing component 30, the managing component 30 provides the system controller 40 with access to an association between virtual machine identifiers and virtual machine functions. An exemplary association (in the form of a mapping table) installed at the system controller 40 by the managing component 30 is illustrated in Fig. 5. For each virtual machine 50 an individual data set associates multiple parameters, including the identifier of the virtual machine (e.g., "PL-01"), the function the virtual machine 50 will have in the cluster 20 (e.g., "Payload"), a Layer 2 address of the virtual machine (which will initially not be known to the system controller 40), a Layer 3 address of the virtual machine 50, as well as booting information.

The booting information may conform to RFC 2132 and comprise an address of a boot server that is configured to provide one or more boot files. Furthermore, the booting information provides a file path and a file name for each of a kernel file and a configuration file. The kernel file includes an operating system for the virtual machine 50 and the configuration file configures the virtual machine 50 with respect to its specific function within the cluster 20.

In the exemplary table illustrated in Fig. 5, three individual data sets for three virtual machines 50 are defined. Two of those three virtual machines 50 have the same function and therefore require the same boot files. The third virtual machine 50 has a different function "Payload_advanced" and thus requires other boot files.

As shown in Fig. 5, for each virtual machine 50 to be deployed a dedicated identifier (e.g., "PL-01") is defined. That identifier is in one variant locally unique within the cluster 20. This means that the system controller 40 is enabled to differentiate the virtual machines 50 within its cluster 20. In other variants, the identifiers may be defined such that they are unique over multiple clusters 20 managed by the same managing component 30. In still further implementations, the identifiers may be globally unique.

As also illustrated in Fig. 6, for each virtual machine 50 to be deployed a dedicated Layer 3 (IP) address has been assigned. The Layer 3 address will be communicated to a virtual machine 50 together with the booting information dedicated to that virtual machine.

Once the system controller 40 has been deployed and been provided with a table as illustrated in Fig. 5 (or with similar information associating at least virtual machine identifiers and virtual machine functions), the managing component 30 determines a virtual machine 50 and its identifier (step 404) and deploys that virtual machine 50 (step 406). At deployment time of the virtual machine 50, the managing component 30 configures (e.g., modifies or programs) the particular virtual machine 50 to include the unique identifier that makes it distinguishable from the other virtual machines 50. As will be appreciated, configuring a specific virtual machine 50 with a specific identifier will at the same time assign a dedicated function to that virtual machine 50 (see the table in Fig. 5).

The managing component 30 has various options for configuring a specific virtual machine 50. As an example, the firmware of a virtual network card of the virtual machine 50 may be configured to include the virtual machine identifier. Additionally, or as an alternative, one or more of a BIOS and a virtual EEPROM of that virtual machine 50 may be configured with the virtual machine identifier. The configuration of the virtual machines 50 by the managing component 30 is static and performed at deployment time (step 406).

In the implementation illustrated in Fig. 3, the managing component 30 determines the virtual machine identifier to be used for configuring one of the virtual machines 50 from the OVF file 60 (step 404). That file 60 contains for each virtual machine 50 a descriptor as shown in Fig. 6. In the example of Fig. 6, a first virtual machine "vm-01" is associated with the identifier "PL-01" and dedicated configuration parameters. The configuration parameters indicate the memory resources to be allocated to the virtual machine 50 (3 GB) as well as the number of processors cores (2) to be assigned to the virtual machine 50, and so on.

As discussed above, the identifiers defined in the OFV file 60 are associated with dedicated functions of the virtual machines to be deployed (see Fig. 5). The association between virtual machine identifiers and virtual machine functions may either be defined in the OFV file 60, via operator settings of the managing component 30, or otherwise.

In the exemplary scenario illustrated in Fig. 3, the different identifiers assigned to the three virtual machines 50 are illustrated by circles with different fillings.

After a specific virtual machine 50 has been deployed, it performs a PXE boot process as discussed above, or any other boot process, to obtain the operating system and configuration information required for performing its dedicated function within the cluster 20. To this end, the virtual machine 50 initially has to determine the identifier that has been statically configured at deployment time (step 408). As explained above, the virtual machine 50 may determine its identifier configuration from the firmware of its virtual network card, its BIOS or its virtual EEPROM.

Once the virtual machine 50 has determined its identifier, it sends a request message for booting information to the system controller 40 (step 410). The request message includes the virtual identifier. In a PXE boot process, the request message may be a DHCP request message that is sent by the virtual machine 50 to a broadcast address. The DHCP request message comprises a source MAC address together with the identifier assigned to the virtual machine 50. The source MAC address may in one variant be autonomously generated by the virtual machine 50 (e.g., based on a random number).

Since the system controller 40 is configured to be of the same Layer 2 domain like the virtual machines 50, the system controller 40 will receive the DHCP request messages broadcasted by the virtual machines 50 (together with the associated identifier and MAC address of an individual virtual machine 50).

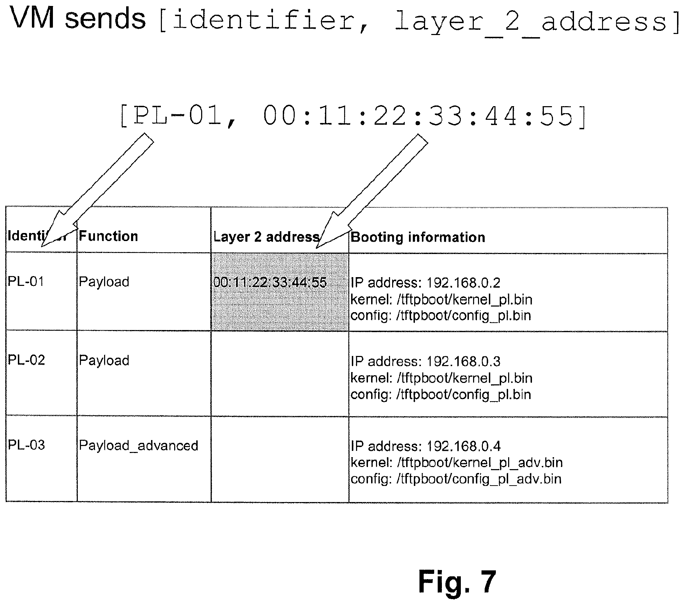

Fig. 7 illustrates the processing steps performed by the system controller 40 in response to receipt of a DHCP request message from one of the virtual machines 50. As explained above, the DHCP request message will include both the unique identifier of the virtual machine 50 (here "PL-01") as well as the corresponding source MAC address (here "00:11:22:33:44:55"). Based on the virtual machine identifier, the system controller 40 can look-up the data set (i.e., table entry) associated with that identifier. The system controller 40 can thus determine both the function assigned to the virtual machine 50 (here "Payload") as well as the IP address that has statically been configured for that virtual machine 50 (here: "192.168.0.2"). Additionally, the system controller 40 can determine the booting information associated with the function the virtual machine 50 will have in the cluster 20. That booting information will be sent together with the IP address assigned to the virtual machine 50 in a DHCP response message to the virtual machine 50. The system controller 40 will further supplement the data set it maintains for the virtual machine 50 with the source MAC address received from the virtual machine 50, as illustrated in Fig. 7.

Upon receipt of the DHCP response message with the proper IP address and the booting information required for fulfilling its dedicated function, the virtual machine 50 may continue the boot process as explained above with respect to an exemplary PXE scenario.

It can be appreciated from Fig. 5 that there will generally be a one-to-one mapping between the function of a virtual machine 50 and the associated booting information.

What matters to the virtual machine 50 is, of course, the booting information. The "function" column in Fig. 5 can therefore be regarded as descriptive information for a system operator only without specific technical implications. As such, the booting information defines the function of virtual machine 50 and can therefore be regarded as synonymous therewith.

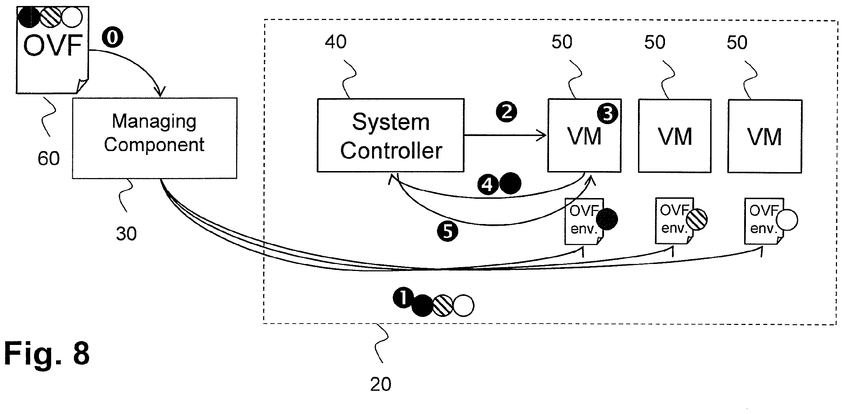

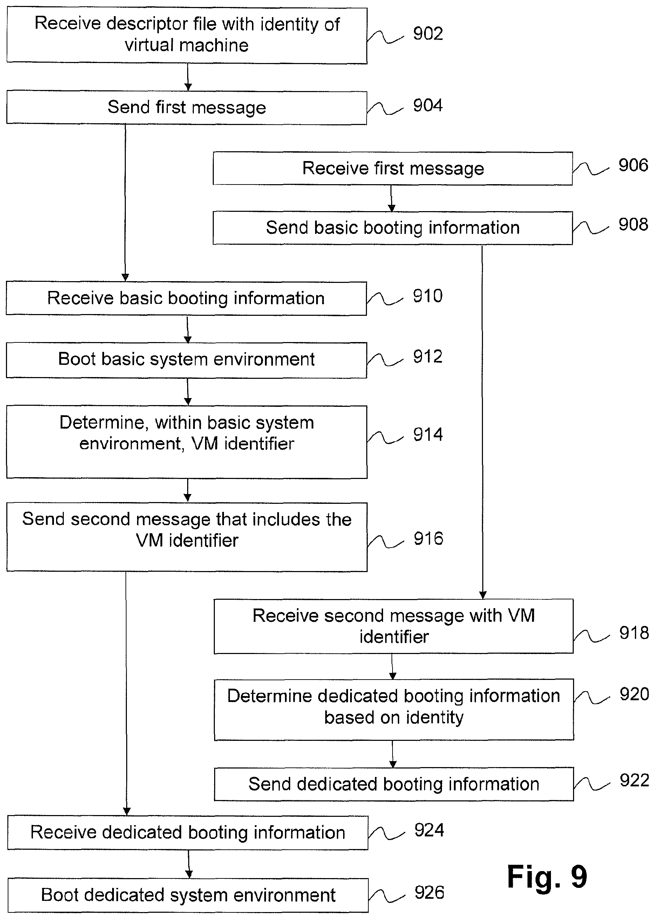

Fig. 8 illustrates a second non-claimed embodiment of a signaling among the components constituting the virtualized computing system 10 of Figs. 1 and 2. Fig. 9 shows a flow diagram with certain method steps performed by the system controller 40 and one of the virtual machines 50 in connection with the signaling illustrated in Fig. 3. It will be appreciated that also the technique discussed hereinafter with respect to Figs. 8 and 9 can be implemented without the switch 70.

With respect to Fig. 8, the initial steps performed by the managing component 30 are essentially the same as the steps explained above with reference to Fig. 3. This applies in particular to the deployment of the system controller 40.

In a first variant, the virtual machines 50 are also deployed as discussed above with reference to Figs. 3 and 4. Alternatively, as shown in Fig. 8, each virtual machine 50 may be provided, at deployment time or at a later point in time, with a "lean" OVF file or similar information describing the virtual machine at least in terms of the unique identifier assigned to it (step 902). The information contained in the OVF file provided to one of the virtual machines 50 can be the same information as illustrated in Fig. 6.

After an individual virtual machine 50 has been deployed and configured with its unique identity, it performs a PXE-type or other boot process. During that boot process, it sends a generic request message to the system controller 40 (see step 904). As an example, a generic DHCP request message may be broadcasted by the virtual machine 50 in this regard.

The initial request message will contain the source MAC address of the virtual machine 50 as explained above, but will not (yet) contain the identifier of the virtual machine 50 as the virtual machine 50 is not yet configured to process the OVF file received from the managing component 30.

The system controller 40, which is again part of the same Layer 2 domain as the virtual machines 50, will receive the broadcasted DHCP request message. However, since that message does not contain any virtual machine identifier, and since the source MAC address contained in the message is initially unknown to the system controller 40, the system controller 40 cannot determine the booting information required for the requesting virtual machine 50. Specifically, the table of Fig. 5 or similar association information cannot be consulted unless the identifier of the virtual machine 50 is known to the system controller 40.

For this reason, the system controller 40, upon receipt of the generic DHCP request message in step 906, first assigns a preliminary IP address to the requesting virtual machine 50 and selects basic, or generic, booting information. In step 908, the preliminary IP address and the basic booting information are sent to the requesting virtual machine 50. The preliminary IP address enables the virtual machine 50 to use the Transport Control Protocol (TCP)/IP stack. The basic booting information defines a file path to a generic system kernel and points to a boot server. As explained above, in one variant the system controller 40 itself may be configured as a boot server (e.g., as a TFTP server). The generic system kernel provides a small operating and file system with minimal functionality to the virtual machine 50 so that it is enable a to execute simple procedures.

The basic booting information is received by the virtual machine 50 in step 910. The virtual machine 50 then, in step 912, uses the basic booting information to boot a basic system environment that comprises the minimal operating and file system. The basic system environment booted in step 912 is eqiupped with processing logic that permits the virtual machine 50 to read the OVF file received from the managing component 30. As an example, a virtual CD-ROM drive may have been attached to the virtual machine 50 at deployment, wherein that drive contains the associated OVF file and can be accessed within the basic system environment. In this way, the virtual machine 50 determines, within the basic system environment, its identifier (e.g., "PL-01") as defined in the OVF file 60 (step 914).

Since the virtual machine 50 has been provided with the basic system environment and has an IP address assigned to it, the virtual machine 50 can send a further request message in step 916. That message includes the identifier of the virtual machine 50 in order to obtain booting information dedicated to the virtual machine 50 in terms of the function the virtual machine 50 is to assume within the cluster 20. Based on the preliminary IP address, the virtual machine 50 may use any protocol based on TCP/IP for the messaging in step 916. As an example, HTTP, TFTP or FTP may be used.

In the present implementation, it will be assumed that the message sent by the virtual machine 50 in step 916 is again received by the system controller 40 in step 918. Since the request message includes the identity of the virtual machine 50 (e.g., "PL-01"), the system controller may consult locally available association information, such as the table of Fig. 5, to determine, based on the identifier, the booting information dedicated to the virtual machine (step 920). The dedicated booting information associated with the identifier can then be returned to the virtual machine 50 as discussed above with reference to Figs. 3 to 6 (step 922). It will be appreciated that the system controller 40 may at this point also enter a Layer 2 address (as received in step 906) into the associated data set.

The dedicated booting information sent by the system controller in step 922 is received by the virtual machine 50 in step 924. Based on the booting information received in step 924, the virtual machine 50 can then boot its dedicated system environment for its specific function within the cluster 20 (e.g., "Payload") in step 926 as explained above.

In certain cases, the association information maintained by the system controller 40 includes a dedicated IP address for each virtual machine 50 that is different from the preliminary IP address assigned earlier (see Fig. 5). In such a case the virtual machine 50 may be configured to request its dedicated IP address from the system controller 40. The corresponding request may again include the identifier of the virtual machine 50. The system controller 40 then determines, based on the identifier, the dedicated IP address associated with the virtual machine 50 and returns the dedicated IP address to the virtual machine 50. It should be noted that in some variants the dedicated IP address may also be sent together with the booting information in step 922 to the virtual machine 50. In such a case, no explicit request message from the virtual machine 50 is needed.

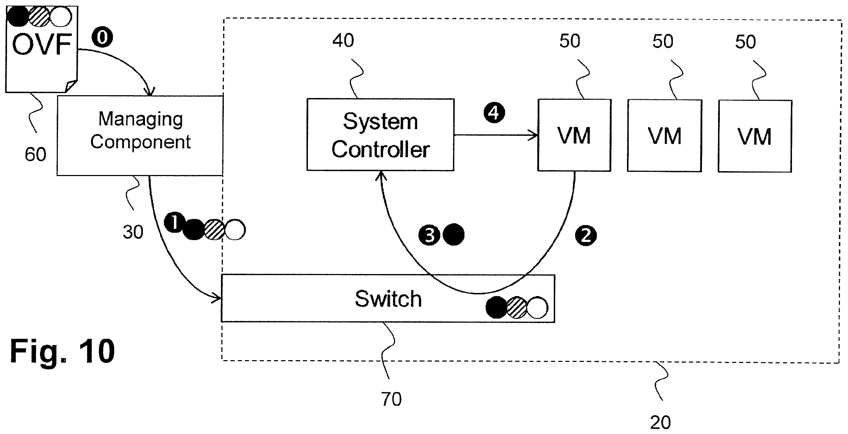

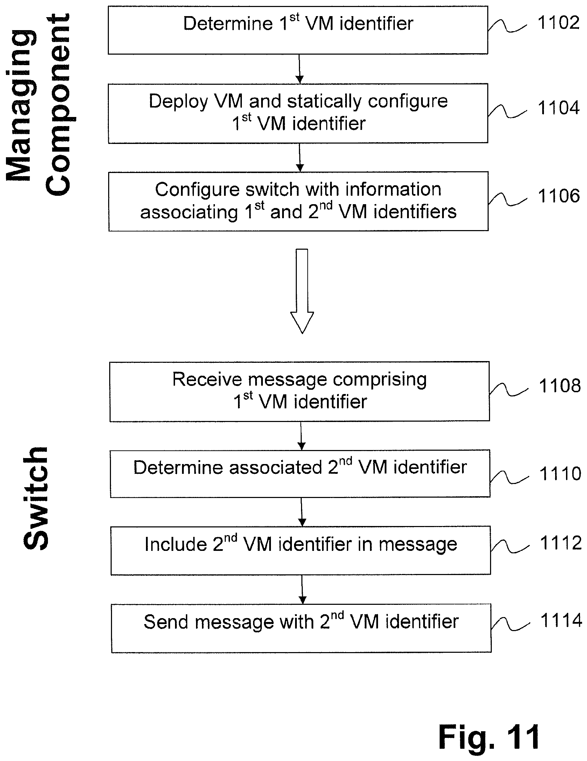

Fig. 10 illustrates a third non-claimed embodiment of a signaling among the components constituting the virtualized computing system 10 of Figs. 1 and 2. Fig. 11 shows a flow diagram with certain method steps performed by the managing component 30 and the switch 70 in connection with the signaling illustrated in Fig. 10. In the present non-claimed embodiment the virtual machines 50 and the system controller 40 are thus connected by at least one (virtual or physical) switch 70. The switch 70 is configured to modify signaling (e.g., packets) between the system controller 40 and the virtual machines 50 on-the-fly. For this purpose, the switch 70 may be configured to support a deep packet inspection technique. While the switch 70 in the non-claimed embodiment illustrated in Fig. 10 is part of the cluster 20, the switch 70 may alternatively be a non-virtual component outside the cluster 20.

The initial steps performed in connection the signaling non-claimed embodiment illustrated in Fig. 10 are similar to the steps discussed above with reference to the signaling non-claimed embodiment of Figs. 3 and 8. This applies in particular to the deployment of the system controller 40 and of the virtual machines 50 by the managing component 30.

Deviating from the non-claimed embodiments above, in the present non-claimed embodiment each virtual machine 50 is associated with two dedicated identifiers. One or both of the identifiers associated with a particular virtual machine 50 may take the form of an MAC address. In some implementations, at least one of the identifiers may also be different from a network address and take a form similar to the identifiers discussed above (e.g., "PL-01").

The managing component 30 is configured to determine, for an individual virtual machine 50 to be deployed, a first identifier assigned to that virtual machine (step 1102). The first identifier may be determined from a descriptor as the file 60.

Then, in step 1104, the managing component 30 deploys the virtual machine 50 and statically configures the virtual machine at deployment, with the first identifier determined in step 1102. In step 1104, the managing component 30 may configure the virtual machine 50 with a dedicated MAC address, or, alternatively, with a dedicated identifier as discussed above with reference to Figs. 5 and 6.

In a further step 1106, the managing component 30 configures the switch 70 with information associating the first and second identifiers of each virtual machine 50 to be deployed. In one variant, each switch 70 is configured to access a table that defines a one-to-one mapping between first and second identifiers for multiple virtual machines 50. The first identifiers and the second identifiers are each unique to ensure that the individual virtual machines 50 are distinguishable via both the first identifiers and the second identifiers.

The manging component 30 may further provide the system controller 40 with access to information associating the second identifiers and virtual machine functions. To this end, the system controller may be provided access to a table similar to the one illustrated in Fig. 5. It will be appreciated that in certain configurations the unique identifiers PL-01, PL-02, and so on in Fig. 5 may be replaced by dedicated MAC addresses.

After its deployment, each virtual machine 50 performs a PXE-type or other booting procedure. In that booting procedure, the virtual machine 50 will send a DHCP request message with its statically configured first identifier (e.g., its MAC address) towards the system controller 40. The messaging between the virtual machine 50 and the system controller 40 is intercepted by the switch 70. Thus, in step 1108, the switch 70 receives the DHCP request message sent by the virtual machine 50. The switch 70 analyzes the received message to determine both the first identifier included therein and also determines the associated second identifier of the same virtual machine 50 (step 1110). For this purpose the switch consults its pre-configured table associating the first and second identifiers of the virtual machines 50.

In the further step 1112, the switch 70 includes the second identifier of the requesting virtual machine 50 thus determined in the message. As an example, the switch 70 may replace the first MAC address in the DHCP request message received from the virtual machine 50 with the second MAC address (or other identifier) the system controller 40 expects to see from that virtual machine 50 (see Fig. 5). The resulting DHCP request message with the second identifier is then sent in step 1114 to the system controller 40. The system controller 40 thus sees a known MAC address (or other identifier) to which it can assign the appropriate function and return the associated booting information and, optionally, IP address as explained above with reference to Fig. 5.

Depending on efficiency configurations, the switch 70 can be configured to either rewrite the MAC address (or other identifier) in all traffic going through it, or to do so only for DHCP request and response messaging.

The system controller 40 may return the booting information either directly to the requesting virtual machine 50 or via the switch 70. In case the messaging from the system controller 40 to the virtual machines 50 runs through the switch 70, the switch 70 may perform its translation function in the opposite direction (i.e., include the first identifier in the message received from the system controller 40 prior to forwarding it to the associated virtual machine 50).

In case additional virtual machines 50 are added at a later point in time, or if an existing virtual machine 50 is removed from the cluster 20, the managing component 30 may inform the switch 70 accordingly. The switch 70 may thus update the association of identifiers.

As has been explained above, the translation function of the switch 70 may in one variant be based solely on MAC addresses as first and second identifiers. In another implementation, the switch 70 may translate an MAC address received from a virtual machine 50 into a unique identifier different from a network address, such as "PL-01" (and *vice versa*). In such a case the unique identifier need not be kept in the virtual machine 50 (e.g., in the firmware of the virtual network card as explained above), but in the switch 70. The processing capabilities of the switch 70 in this implementation cannot be limited to Layer 2 processing, but also require Layer 3 packet inspection capabilities so as to parse and modify the DHCP requests.

As has become apparent from the above description of exemplary embodiments, the technique presented herein permits a deployment of clustered applications in a cloud environment and a booting without requiring manual intervention. The technique also facilitates an increase or decrease of a cluster size by adding or removing virtual machines without manual intervention.

In certain variants, unique identifiers (e.g., MAC addresses) can be dynamically assigned to the virtual machines when they are created, instead of requiring the identifiers (e.g., MAC addresses) to be static and pre-configured. This approach is useful to allow two or more application clusters of the same type to be deployed (e.g., in the same network) without having conflicting identifiers (e.g., conflicting MAC addresses).

The technique presented herein can be useful for legacy application clusters that are to be ported to a cloud or virtualization environment and for new application clusters that are designed to work in both virtualized and physical deployments.

Modifications of the disclosed embodiments will come to mind to one skilled in the art having the benefit of the teachings presented in the foregoing description and the associated drawings. Therefore, it is to be understood that the present invention is not to be limited to the specific embodiments disclosed herein, and that modifications are intended to be included within the scope of this disclosure. Although specific terms may be employed herein, they are used in a generic and descriptive sense only and not for purposes of limitation.

## Claims

1. A method of operating a managing component (30) of a virtualized application cluster (20), wherein the cluster is to comprise a system controller (40) and at least one virtual machine (50) with a dedicated function, the method comprising:
deploying (402) the system controller and providing the system controller with access to an association between virtual machine identifiers and virtual machine functions, wherein each virtual machine identifier is locally unique within the virtualized cluster;
determining (404) a virtual machine identifier that is associated with the dedicated function of the virtual machine to be deployed, wherein the dedicated function defines booting information dedicated to the virtual machine, wherein the booting information defines at least one of an address of a boot server configured to provide one or more boot files to the virtual machine and a file path to the one or more boot files, and wherein the virtual machine identifier is determined from an Open Virtualization Format (OVF) file (60), wherein the OVF file (60) contains a descriptor for each virtual machine; and
deploying (406) the virtual machine and statically configuring the virtual machine, at deployment, with the determined virtual machine identifier.

2. The method of claim 1, wherein
each virtual machine identifier is associated with exactly one function.

3. The method of claim 1 or 2, wherein
multiple virtual machine identifiers are associated with the same function.

4. The method of any of claims 1 to 3, wherein
the managing component configures at least one of a network card firmware, a Basic Input Output System, BIOS, and a virtual Erasable Electronically Programmable Read-Only Memory, EEPROM, of the virtual machine with the determined virtual machine identifier.

5. The method of claim 1, wherein
the system controller is deployed as a virtual machine within the cluster.

6. The method of claim 1, wherein
the virtual machine identifier is different from a Layer 2 address of the virtual machine.

7. The method of claim 1, further comprising
reading a descriptor of the virtualized application cluster; and
deploying at least one of the system controller and the virtual machine in accordance with the descriptor.

8. The method of claim 7, wherein
the virtual machine identifier is determined from the descriptor.

9. A managing component (30) of a virtualized application cluster (20), wherein the cluster is to comprise a system controller (40) and at least one virtual machine (50) with a dedicated function, the managing component being configured to:
deploy the system controller and provide the system controller with access to an association between virtual machine identifiers and virtual ma-chine functions;
determine a virtual machine identifier that is associated with the dedicated function of the virtual machine to be deployed, wherein the dedicated function defines booting information dedicated to the virtual machine, wherein the booting information defines at least one of an address of a boot server configured to provide one or more boot files to the virtual machine and a file path to the one or more boot files, and wherein the virtual machine identifier is determined from an Open Virtualization Format (OVF) file (60), wherein the OVF file (60) contains a descriptor for each virtual machine; and
deploy the virtual machine and statically configure the virtual machine, at deployment, with the determined virtual machine identifier.

10. A virtualized computing system (10) comprising one or more of the components (30; 40; 50; 70) of claim 9.

## Patentansprüche

1. Verfahren zum Betreiben einer Verwaltungskomponente (30) eines virtualisierten Anwendungsclusters (20), wobei der Cluster eine Systemsteuerung (40) und mindestens eine virtuelle Maschine (50) mit einer dedizierten Funktion umfassen soll, wobei das Verfahren umfasst:
Einsetzen (402) der Systemsteuerung und Bereitstellen, für die Systemsteuerung, von Zugriff auf eine Zuordnung zwischen Kennung für virtuelle Maschinen und virtuellen Maschinenfunktionen, wobei jede Kennung für virtuelle Maschinen innerhalb des virtualisierten Clusters lokal eindeutig ist;
Bestimmen (404) einer Kennung für virtuelle Maschinen, die der dedizierten Funktion der einzusetzenden virtuellen Maschine zugeordnet ist, wobei die dedizierte Funktion für die virtuelle Maschine dedizierte Boot-Informationen definiert, wobei die Boot-Informationen mindestens eines von einer Adresse eines Boot-Servers, der dazu konfiguriert ist, eine oder mehrere Boot-Dateien an die virtuelle Maschine bereitzustellen und einem Dateipfad zu der einen oder den mehreren Boot-Dateien definieren, und wobei die Kennung für die virtuelle Maschine aus einer Open-Virtualization-Format-Datei (OVF-Datei) (60) bestimmt wird, wobei die OVF-Datei (60) einen Deskriptor für jede virtuelle Maschine enthält; und
Einsetzen (406) der virtuellen Maschine und statisches Konfigurieren der virtuellen Maschine beim Einsatz mit der bestimmten Kennung für die virtuelle Maschine.

2. Verfahren nach Anspruch 1, wobei:
jede Kennung für virtuelle Maschinen genau einer Funktion zugeordnet ist.

3. Verfahren nach Anspruch 1 oder 2, wobei
mehrere Kennungen für virtuelle Maschinen der gleichen Funktion zugeordnet sind.

4. Verfahren nach einem der Ansprüche 1 bis 3, wobei
die Verwaltungskomponente mindestens eines von einer Netzwerkkartenfirmware, einem Basic Input Output System, BIOS, und einem virtuellen Erasable Electronically Programmable Read-Only Memory, EEPROM, der virtuellen Maschine mit der bestimmten Kennung für virtuelle Maschinen konfiguriert.

5. Verfahren nach Anspruch 1, wobei
die Systemsteuerung als virtuelle Maschine innerhalb des Clusters eingesetzt wird.

6. Verfahren nach Anspruch 1, wobei
sich die Kennung für virtuelle Maschinen von einer Layer-2-Adresse der virtuellen Maschine unterscheidet.

7. Verfahren nach Anspruch 1, ferner umfassend
Lesen eines Deskriptors des virtualisierten Anwendungsclusters; und
Einsetzen mindestens eines von einer Systemsteuerung und der virtuellen Maschine gemäß dem Deskriptor.

8. Verfahren nach Anspruch 7, wobei
die Kennung für virtuelle Maschinen aus dem Deskriptor bestimmt wird.

9. Verwaltungskomponente (30) eines virtualisierten Anwendungsclusters (20), wobei der Cluster eine Systemsteuerung (40) und mindestens eine virtuelle Maschine (50) mit einer dedizierten Funktion umfassen soll, wobei die Verwaltungskomponente konfiguriert ist zum:
Einsetzen der Systemsteuerung und Bereitstellen, für die Systemsteuerung, von Zugriff auf eine Zuordnung zwischen Kennungen für virtuelle Maschinen und virtuellen Maschinenfunktionen;
Bestimmen einer Kennung für die virtuelle Maschine, die der dedizierten Funktion der virtuellen Maschine zugeordnet ist, die eingesetzt werden soll, wobei die dedizierte Funktion für die virtuelle Maschine dedizierte Boot-Informationen definiert, wobei die Boot-Informationen mindestens eines von einer Adresse eines Boot-Servers, der dazu konfiguriert ist, eine oder mehrere Boot-Dateien an die virtuelle Maschine bereitzustellen und einem Dateipfad zu der einen oder den mehreren Boot-Dateien definieren, und wobei die Kennung für die virtuelle Maschine aus einer Open-Virtualization-Format-Datei (OVF-Datei) (60) bestimmt wird, wobei die OVF-Datei (60) einen Deskriptor für jede virtuelle Maschine enthält; und
Einsetzen der virtuellen Maschine, und statisches Konfigurieren der virtuellen Maschine beim Einsatz mit der bestimmten Kennung für die virtuelle Maschine.

10. Virtualisiertes Rechensystem (10), umfassend eine oder mehrere der Komponenten (30; 40; 50; 70) nach Anspruch 9.

## Revendications

1. Procédé de fonctionnement d'un composant de gestion (30) d'une grappe d'applications virtualisées (20), dans lequel la grappe doit comprendre un contrôleur de système (40) et au moins une machine virtuelle (50) avec une fonction dédiée, le procédé comprenant :
le déploiement (402) du contrôleur de système et la fourniture au contrôleur de système d'un accès à une association entre des identificateurs de machine virtuelle et des fonctions de machine virtuelle, dans lequel chaque identificateur de machine virtuelle est localement unique au sein de la grappe virtualisée ;
la détermination (404) d'un identificateur de machine virtuelle qui est associé à la fonction dédiée de la machine virtuelle à déployer, dans lequel la fonction dédiée définit des informations d'amorçage dédiées à la machine virtuelle, dans lequel les informations d'amorçage définissent au moins un parmi une adresse d'un serveur d'amorçage configuré pour fournir un ou plusieurs fichiers d'amorçage à la machine virtuelle et un chemin de fichier vers le ou les fichiers d'amorçage, et dans lequel l'identificateur de machine virtuelle est déterminé à partir d'un fichier en format de virtualisation ouvert (OVF) (60), dans lequel le fichier OVF (60) contient un descripteur pour chaque machine virtuelle ; et
le déploiement (406) de la machine virtuelle et la configuration statique de la machine virtuelle, au déploiement, avec l'identificateur de machine virtuelle déterminé.

2. Procédé selon la revendication 1, dans lequel
chaque identificateur de machine virtuelle est associé à exactement une fonction.

3. Procédé selon la revendication 1 ou 2, dans lequel
de multiples identificateurs de machine sont associés à la même fonction.

4. Procédé selon l'une quelconque des revendications 1 à 3, dans lequel
le composant de gestion configure au moins un parmi un micrologiciel de carte réseau, un système d'entrée-sortie de base, BIOS, et une mémoire morte programmable effaçable électroniquement, EEPROM, virtuelle de la machine virtuelle avec l'identificateur de machine virtuelle déterminé.

5. Procédé selon la revendication 1, dans lequel
le contrôleur de système est déployé en tant que machine virtuelle au sein de la grappe.

6. Procédé selon la revendication 1, dans lequel
l'identificateur de machine virtuelle est différent d'une adresse de Couche 2 de la machine virtuelle.

7. Procédé selon la revendication 1, comprenant en outre
la lecture d'un descripteur de la grappe d'applications virtualisées ; et
le déploiement au moins un parmi le contrôleur de système et la machine virtuelle conformément au descripteur.

8. Procédé selon la revendication 7, dans lequel
l'identificateur de machine virtuelle est déterminé à partir du descripteur.

9. Composant de gestion (30) d'une grappe d'applications virtualisées (20), dans lequel la grappe doit comprendre un contrôleur de système (40) et au moins une machine virtuelle (50) avec une fonction dédiée, le composant de gestion étant configuré pour :
déployer le contrôleur de système et fournir au contrôleur de système un accès à une association entre des identificateurs de machine et des fonctions de machine virtuelle ;
déterminer un identificateur de machine virtuelle qui est associé à la fonction dédiée de la machine virtuelle à déployer, dans lequel la fonction dédiée définit des informations d'amorçage dédiées à la machine virtuelle, dans lequel les informations d'amorçage définissent au moins un parmi une adresse d'un serveur d'amorçage configuré pour fournir un ou plusieurs fichiers d'amorçage à la machine virtuelle et un chemin de fichier vers le ou les fichiers d'amorçage, et dans lequel l'identificateur de machine virtuelle est déterminé à partir d'un fichier en format de virtualisation ouvert (OVF) (60), dans lequel le fichier OVF (60) contient un descripteur pour chaque machine virtuelle ; et
déployer la machine virtuelle et configurer de façon statique la machine virtuelle, au déploiement, avec l'identificateur de machine virtuelle déterminé.

10. Système informatique virtualisé (10) comprenant un ou plusieurs des composants (30 ; 40 ; 50 ; 70) selon la revendication 9.
